Europäisches Patentamt

European Patent Office

Office européen des brevets

(11) Veröffentlichungsnummer: **0 364 937**
A2

## (12) EUROPÄISCHE PATENTANMELDUNG

(21) Anmeldenummer: 89119218.9

(22) Anmeldetag: 17.10.89

(51) Int. Cl.5: **B23Q 7/12**

(30) Priorität: 17.10.88 DE 8813048 U

(43) Veröffentlichungstag der Anmeldung:
25.04.90 Patentblatt 90/17

(84) Benannte Vertragsstaaten:
AT CH DE ES FR GB IT LI SE

(71) Anmelder: EWALD KAUFMANN GMBH U.
CO.KG
Dieselstrasse 12-14
D-7537 Remchingen - 1(DE)

(72) Erfinder: Höpfinger, Arnold
Karl-Möller-Str. 3
DE-7535 Königsbach-Stein 2(DE)

(74) Vertreter: Twelmeier, Ulrich, Dipl.Phys. et al
Patentanwälte Dr. Rudolf Bauer
Dipl.-Ing.Helmut Hubbuch, Dipl.Phys. Ulrich
Twelmeier Westliche Karl-Friedrich-Strasse
29-31
D-7530 Pforzheim(DE)

(54) Anordnung aus einer Werkzeugmaschine, insbesondre Drehmaschine, und aus einer Werkstücksammeleinrichtung.

(57) Eine Anordnung bestehend aus einer Werkzeugmaschine, insbesondere Drehmaschine, und aus einer Werkstücksammeleinrichtung. Die Werkzeugmaschine umfaßt einen Sockel, auf dem eine Werkstückspannvorrichtung angeordnet ist und ein Werkzeug, desweiteren eine Einrichtung zur Werkstückzuführung, und eine Werkstückauffangeinrichtung. Die Werkstückauffangeinrichtung läßt die von der Werkstückspannvorrichtung freigegebenen Werkstücke in die Werkstückauffangeinrichtung gleiten. Die Werkstücksammeleinrichtung (33) umfaßt eine oder mehrere Reihen aufeinanderfolgender Sammelbehälter (14). Über jedem Sammelbehälter (14) ist wahlweise das untere Ende der Werkstückauffangeinrichtung (15) positionierbar.

*Fig. 1*

## Anordnung aus einer Werkzeugmaschine, insbesondere Drehmaschine und aus einer Werkstücksammeleinrichtung

Die Erfindung geht aus von einer Anordnung aus einer Werkzeugmaschine und einer Werkstücksammeleinrichtung mit den im Oberbegriff des Anspruchs 1 angegebenen Merkmalen.

Einmal eingestellt, können automatisch arbeitende Werkzeugmaschinen über längere Zeiträume hinweg, z.B. des Nachts, ohne Überwachung arbeiten, denn die Werkstücke werden automatisch zugeführt und entnommen und dann in einer Werkstücksammeleinrichtung abgelegt. Bei der Werkstücksammeleinrichtung handelt es sich um einen Sammelbehälter. Kommt es während dieser Zeit zu Betriebsstörungen, beispielsweise zu einer Beschädigung des Werkzeugs, dann produziert die Werkzeugmaschine Ausschuß und im Sammelbehälter finden sich neben ordnungsgemäß bearbeiteten Werkstücken auch die fehlerhaften Werkstücke, die dann von Hand ausgesondert werden müssen, was ausserordentlich mühsam ist.

Der Erfindung liegt die Aufgabe zugrunde, dem durch eine neuartige Ausbildung der Anordnung aus der Werkzeugmaschine und der Werkstücksammeleinrichtung abzuhelfen.

Diese Aufgabe wird gelöst durch eine Anordnung aus einer Werkzeugmaschine und einer Werkstücksammeleinrichtung mit den im Anspruch 1 angegebenen Merkmalen. Vorteilhafte Weiterbildungen der Erfindung sind Gegenstand der Unteransprüche.

Dadurch, dass eine oder mehrere Reihen aufeinanderfolgender Sammelbehälter vorgesehen ist, ist es möglich, die Werkstücke, welche die Wekzeugmaschine bearbeitet, während sie unbeaufsichtigt ist, auf mehrere Sammelbehälter zu verteilen, welche aufeinanderfolgend zum Einsatz kommen. Kommte es z.B. zu einem Werkzeugschaden, dann wird man nur in einem der Sammelbehälter nebeneinander ordnungsgemäße und fehlerhafte Werkstücke finden. In den zuvor gefüllten Sammelbehältern werden sich nur ordnungsgemäße Werkstücke befinden, in den danach gefüllten Sammelbehältern nur schadhafte. Der Aufwand für das Aussortieren läßt sich auf diese Weise stark vermindern.

Das untere Ende des Werkstückauffangvorrichtung, über welche die Werkstücke in die Sammelbehälter gelangen, ist wahlweise über jedem Sammelbehälter positionierbar. Die Positionierung kann wie im Anspruch 2 vorgeschlagen dadurch erfolgen, dass der untere Bereich der Werkstückauffangeinrichtung schwenkbar an der Werkzeugmaschine befestigt ist. Hierdurch wird eine kompakte Anordnung ge schaffen. Das Verschwenken des unteren Bereiches der Werkstückauffangsvorrichtung erfolgt zweckmässigerweise während der Bearbeitungszeit des Werkstückes der Werkzeugmaschine. Dies stellt sicher, dass zum einen das Werkstück nicht auf eine Seitenwand der aufeinanderfolgenden Sammelbehälter fällt und so vielleicht neben die Werkstücksammeleinrichtung fällt und zum anderen das Werkstück nicht in einen falschen Sammelbehälter gelangt.

Zweckmässigerweise sind die Sammelbehälter ortsfest, wenn die Werkzeugmaschine mit einer Werkstückauffangeinrichtung ausgebildet ist, welche im unteren Bereich schwenkbar ist. Hierdurch vereinfacht sich die Koordination zwischen den Relativbewegungen der Sammelbehälter und des unteren Bereichs der Werkstückauffangeinrichtung. Dies hat zur Folge, dass keine aufwendige Steuerung notwendig ist.

Die Anordnung gemäß Anspruch 4 weist eine Werkstückauffangeinrichtung auf, deren unteres Ende ortsfest ist und eine eine oder mehrere Reihen aufeinanderfolgender Sammelbehälter aufweisenden Werkstücksammeleinrichtung, welche in mindestens einer Richtung gemeinsam schrittweise am unteren Ende der Werkstückauffangeinrichtung verschiebbar gelagert sind. Diese Ausführungsform hat den Vorteil, dass die Gefahr eines Verkantens oder eines Werkstückstaus in der Werkstückauffangeinrichtung nicht eintritt, da diese ortsfest ist.

Die eine oder mehreren Reihen aufeinanderfolgenden Sammelbehälter kann als Magazin bezeichnet werden. Weist dieses Magazin mehrere Reihen auf, so bildet dieses ein verschiebbares Feld. Ein derart ausgebildetes Magazin ist vorteilhafterweise in zwei Richtungen verschiebbar. Ein derartiges Magazin weist einen kompakten Aufbau auf. Desweiteren kann eine höhere zeitliche Auflösung erzielt werden, da eine Vielzahl von Sammelbehältern zur Verfügung steht. Diese hohe Auflösung hat den Vorteil, dass die Sortierarbeit stark vermindert werden kann.

Wählt man, wie vorgeschlagen, eine Reihenanordnung von Sammelbehältern, dann kann man diese längsseits am Sockel der Maschine anbringen, wo sie sich für das Bedienen der Maschine praktisch nicht störend oder hinderlich auswirken. Das Anbringen am Sockel der Maschine eröffnet weiterhin die Möglichkeit, das von den Werkstükken abtropfende Kühlmittel zu sammeln und in den Kühlmittelkreislauf der Maschine zurückzuführen.

Das Verschieben der Sammelbehälter geschieht zweckmässigerweise motorisch durch ein Antriebsaggregat, welches durch eine Zeitschaltuhr oder durch einen Werkstückzähler gesteuert ist. Steuert man das Antriebsaggregat durch einen Werkstückzähler, dann ermittelt man zuvor, wieviele Werkstücke ein jeder Behälter mit Sicherheit faßt und läßt die Sammelbehälter jeweils nach einer entsprechend voreingestellten Anzahl bearbeiteter Werkstücke weiterschieben. Verwendet man eine Zeituhr, dann ermittelt man zuvor, nach welcher Zeit ein jeder Behälter bei ungestörtem, ununterbrochenem Lauf der Maschine gefüllt ist und stellt die Zeitschaltuhr so ein, dass sie spätestens nach dieser Zeit die Sammelbehälter um einen Schritt weiterschiebt. Für eine 8 Stunden dauernde Nachtschicht kann man beispielsweise acht Behälter hintereinander anordnen, welche im Stundentakt verschoben werden.

Zweckmässigerweise ordnet man die Sammelbehälter auf einem Schlitten an, welcher auf einem am Sockel der Maschine angebrachten Träger verschiebbar gelagert ist. Auf diesem Schlitten sollten die Sammelbehälter so angeordnet sein, dass sie zum Entleeren einzeln entnehmbar sind. Damit sie auf dem Schlitten einen festen Stand haben, kann man auf der Oberseite des Schlittens beispielsweise Vorsprünge vorsehen, die in entsprechende Ausnehmungen an der Behälterunterseite eingreifen.

Damit das flüssige Kühlmittel von den Werkstücken ablaufen kann, sieht man zweckmässigerweise einen gelochten Boden in den Sammelbehältern vor, so dass das Kühlmittel nach unten herauslaufen kann. Es tropft auf den Schlitten, der deshalb vorzugsweise mit einem schrägen Boden versehen ist, von welchem das Kühlmittel durch einen Ablaufstutzen in eine Rinne abgeleitet werden kann, die man am besten zwischen dem Träger und dem Sockel längsseits des Trägers verlaufend anordnet, so dass sich der Ablaufstutzen während der Verschiebebewegung des Schlittens immer über dieser Rinne befindet. Von dieser Rinne kann eine Leitung in den Sockel der Maschine hineinführen, welche das Kühlmittel in den Kühlmittelkreislauf zurückführt.

Als Antriebsaggregat könnte man z.B. einen Schrittmotor und eine Kette oder einen Riemen verwenden, welcher die Antriebsverbindung zwischen dem Schrittmotor und dem Schlitten herstellt. Geeignet ist auch die Betätigung mittels eines Druckmittelzylinders, der für jeden Schiebeschritt einen Bewegungshub vollführt. Die Übertragung der Bewegung auf den Schlitten kann mittels einer als Zahnstange ausgebildeten Kolbenstange geschehen, welche mit einem ortsfest am Träger angebrachten Zahnrad kämmt und in einer Drehrichtung freilaufend auf einer Welle gelagert ist, auf welcher drehfest ein zweites Zahnrad befestigt ist, welches mit einer am Schlitten befestigten zweiten Zahnstange kämmt.

Als Werkstückauffangeinrichtung eignet sich besonders eine Rutsche, welche auch als geschlossener Kanal ausgebildet sein kann. Um die Werkstücke möglichst ohne Beschädigungsrisiko auffangen und in die Sammelbehälter befördern zu können, ist die Neigung der Werkstückauffangeinrichtung am besten so gewählt, dass sie von oben nach unten abnimmt.

Ein Ausführungsbeispiel der Erfindung ist in den beigefügten Zeichnungen schematisch dargestellt.

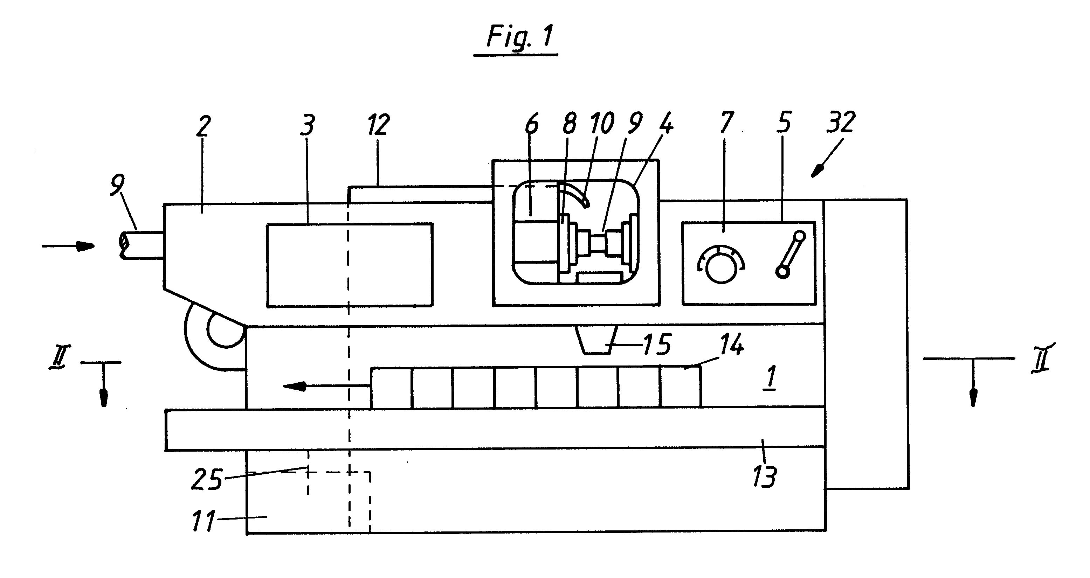

Figur 1 zeigt eine automatisch arbeitende Drehmaschine mit an ihrer Vorderseite angebauten, verschiebbaren Sammelbehältern in der Vorderansicht,

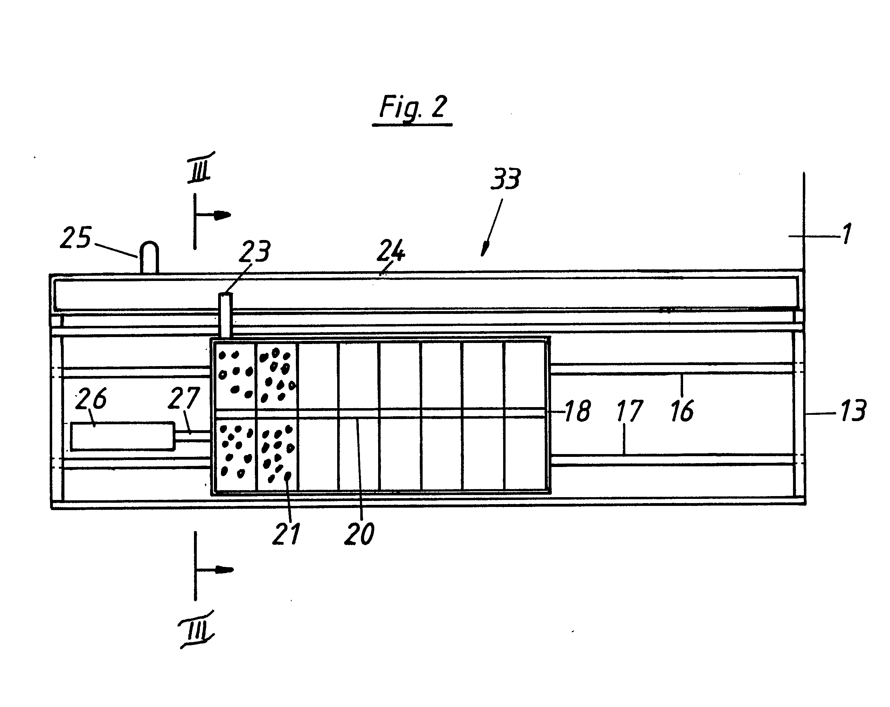

Figur 2 zeigt die angebauten Sammelbehälter und ihren Träger in der Draufsicht,

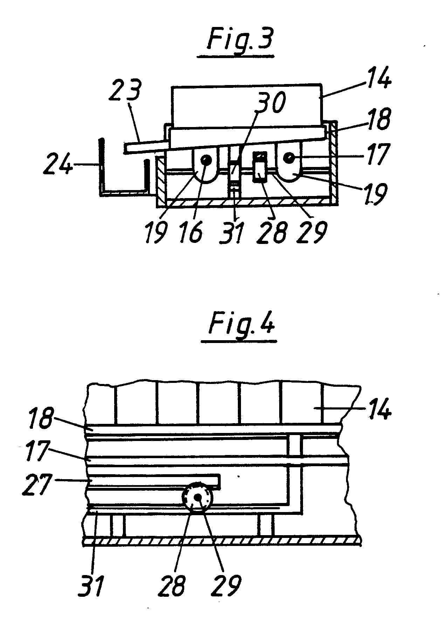

Figur 3 zeigt den Schnitt III-III durch die in Figur 2 dargestellte Anordnung, und

Figur 4 zeigt - im Vergleich zur Figur 1 in vergrößerter Darstellung - einen Ausschnitt des Trägers für die Sammelbehälter in der Vorderansicht mit weggebrochener vorderer Wand.

Die dargestellte Werkzeugmaschine (32) (Drehmaschine) hat einen Sockel 1 (Maschinenbett) und auf dem Sockel hinter der Verkleidung 2 mit Fenstern 3, 4 und 5 einen Spindelstock 6 und einen Reitstock 7 mit einer Werkstückspannvorrichtung 8 zum Einspannen stangenförmiger Werkstücke 9, welche dem nicht dargestellten Werkzeug durch den Reitstock 6 hindurch zugeführt werden. In der Nähe des Werkzeuges ist eine Düse 10 zum Zuführen eines flüssigen Kühlmittels angeordnet, welche aus einem Vorratsbehälter 11 mittels einer im Sockel 1 untergebrachten Pumpe durch eine Leitung 12 hindurch mit dem Kühlmittel gespeist wird. Unterhalb des Werkstückbearbeitungsbereiches befindet sich in an sich bekannter Weise eine Auffangwanne für die Drehspäne und die Kühlflüssigkeit, welche nach Filterung in den Vorratsbehälter 11 zurückgeführt wird.

An der Vorderseite des Sockels 1 ist in halber Höhe über dessen volle Länge ein waagerechter, kastenförmiger Träger 13 befestigt, welcher ein aus acht hintereinander angeordneten, untereinander gleichen Sammelbehältern 14 bestehendes Magazin trägt, welches schrittweise in Längsrichtung des Trägers 13 verschiebbar ist. Die Sammelbehälter dienen zum Aufnehmen der fertigen Werkstücke, welche - wenn sie fertig bearbeitet sind - von der Werkstückspannvorrichtung 8 freigegeben werden, dann in eine Rutsche 15 fallen und durch diese hindurch in jenen Behälter 14 fallen, welcher sich momentan unmittelbar unter der Rutsche 15 befindet.

In dem oben offenen, kastenförmigen Träger 13 sind zwei höhengleiche, zueinander parallele, längsverlaufende Führungsstangen 16 und 17 angeordnet, auf denen ein Schlitten 18 mit an seiner Unterseite angebrachten Gleitlagerböcken 19 getragen und verschieblich geführt ist. Auf diesen Schlitten 18 sind die Sammelbehälter 14 unmittelbar aneinander anggrenzend aufgestellt. Sie haben in der Mitte jeweils einen Handgriff 20, mit dem man sie vom Schlitten 18 abheben kann. Ihr Boden ist als Lochboden mit Löchern 21 versehen, durch die von den Werkstücken abtropfendes Kühlmittel auf den Boden 22 des Schlittens 18 abtropfen kann, welcher schräg verlaufend ausgebildet ist, so dass das Kühlmittel zur tiefsten Stelle läuft und dort durch einen rückseitig herausführenden Stutzen 23 abläuft, welcher in eine Rinne 24 mündet, welche längsseits des Trägers 13 zwischen diesem und dem Sockel 1 angebracht ist. Aus dieser Rinne 24 kann das Kühlmittel durch eine in den Sockel 1 hineinführende Leitung 25 zum Vorratsbehälter 11 zurückgeführt werden.

Zum Verschieben des Schlittens 18 ist im Träger 13 ein Druckmittelzylinder 26 angebracht, dessen Kolbenstange 27 im vorderen Abschnitt als Zahnstange ausgebildet ist und mit einem Zahnrad 28 kämmt, welches auf einer Welle 29 gelagert ist, die ihrerseits waagerecht und im rechten Winkel zu den Führungsstangen 16 und 17 im Träger 13 gelagert ist. Das Zahnrad 28 ist dergestalt mit einer Freilaufnabe auf der Welle 29 gelagert, dass bei ausfahrender Kolbenstange 27 das Zahnrad 28 drehfest mit der Welle 29 gekuppelt ist, während es bei einfahrender Kolbenstange 27 freilaufend ist, also die Welle 29 nicht mitdreht. Neben dem Zahnrad 28 ist auf der Welle 29 ein weiteres Zahnrad 30 befestigt, welches mit der Welle 29 drehfest gekuppelt ist. Das zweite Zahnrad 30 kämmt mit einer zweiten Zahnstange 31, welche mit dem Schlitten 18 verbunden ist. Beim Ausschieben der Kolbenstange 27 wird deshalb der Schlitten auf den Druckmittelzylinder 26 zubewegt, beim Einfahren der Kolbenstange ruht der Schlitten 18.

## Ansprüche

1. Anordnung aus einer Werkzeugmaschine, insbesondere Drehmaschine,
mit einem Sockel und auf dem Sockel mit einer Werkstückspannvorrichtung und einem Werkzeug,
mit einer Einrichtung zur Werkstückzuführung,
und mit einer Werkstückauffangeinrichtung,
und aus einer Werkstücksammeleinrichtung, in welche die Werkstückauffangeinrichtung die von der Werkstückspannvorrichtung freigegebenen Werkstücke gleiten läßt,
**dadurch gekennzeichnet,** dass die Werkstücksammeleinrichtung (33) eine oder mehrere Reihen aufeinanderfolgender Sammelbehälter (14) umfaßt, und
dass das untere Ende der Werkstückauffangeinrichtung (15) wahlweise über jedem Sammelbehälter (14) positionierbar ist.

2. Anordnung nach Anspruch 1,
**dadurch gekennzeichnet,** dass der untere Bereich der werkstückauffangeinrichtung (15) schwenkbar an der Werkzeugmaschine (32) befestigt ist und das untere Ende wahlweise über jedem Sammelbehälter (14) positionierbar ist.

3. Anordnung nach Anspruch 1 oder 2,
**dadurch gekennzeichnet,** dass die Sammelbehälter (14) ortsfest sind.

4. Anordnung nach Anspruch 1,
**dadurch gekennzeichnet,** dass das untere Ende der Werkstückauffangeinrichtung (15) ortsfest ist und die eine oder mehrere Reihen aufeinanderfolgender Sammelbehälter (14) in mindestens einer Richtung gemeinsam schrittweise am unteren Ende der Werkstückauffangeinrichtung (15) verschiebbar gelagert sind.

5. Anordnung nach Anspruch 4,
**dadurch gekennzeichnet,** dass ein in zwei Richtungen verschiebbares Feld von Sammelbehältern (14) vorgesehen ist.

6. Anordnung nach Anspruch 1,
**dadurch gekennzeichnet,** dass die Sammelbehälter (14) auf einem am Sockel (1) angebrachten Träger (13) gelagert sind.

7. Anordnung nach Anspruch 1 oder 6 mit einem Kühlmittelkreislauf, welcher einen Vorratsbehälter, eine Pumpe, eine Kühlmitteldüse und eine Kühlmittelauffangeinrichtung umfaßt,
**dadurch gekennzeichnet,** dass die Sammelbehälter (14) im Boden eine Ablauföffnung (21) für das flüssige Kühlmittel haben, welche durch eine Leitung (23-25) mit dem Vorratsbehälter (11) des Kühlmittelkreislaufs verbunden ist.

8. Anordnung nach einem der Ansprüche 1 bis 7,
**dadurch gekennzeichnet,** dass zum Verschieben der Sammelbehälter (14) ein Antriebsaggregat (26) vorgesehen ist, welches durch eine Zeitschaltuhr oder durch einen Werkstückzähler gesteuert ist.

9. Anordnung nach einem der Ansprüche 4 bis 8,
**dadurch gekennzeichnet,** dass die Sammelbehälter (14) auf einem Schlitten (19) angeordnet sind.

10. Anordnung nach einem der vorstehenden Ansprüche,
**dadurch gekennzeichnet,** dass die Sammelbehälter (14) einzeln entnehmbar sind.

11. Anordnung nach Anspruch 7 und 9,
**dadurch gekennzeichnet,** dass der Schlitten (18) einen schrägen Ablaufboden (22) hat, welcher sich über einen Ablaufstutzen (23) in eine sich längs des Trägers (13) angeordnete Rinne (24) entleert, welche durch eine Leitung (25) mit dem Vorratsbehälter (11) für das Kühlmittel verbunden ist.

12. Anordnung nach Anspruch 8 oder 9,

**dadurch gekennzeichnet,** dass das Antriebsaggregat (26) ein am Träger (13) angebrachter Druckmittelzylinder ist, der für jeden Schiebeschritt einen Bewegungshub vollführt.

13. Anordnung nach Anspruch 1 oder 2, **dadurch gekennzeichnet,** dass die Werkstückauffangeinrichtung (15) als Rutsche oder als ein geschlossener Kanal ausgebildet ist.

14. Anordnung nach Anspruch 1 oder 13, **dadurch gekennzeichnet,** dass die Neigung der Werkstückauffangeinrichtung (15) von oben nach unten abnimmt.

Fig. 1

Fig. 2

EP 0 364 937 A2

_Fig.3_

_Fig.4_